(19)

Europäisches
Patentamt
European
Patent Office
Office européen
des brevets

(11)  **EP 2 533 202 A2**

(12)  # EUROPEAN PATENT APPLICATION

(43) Date of publication:
**12.12.2012 Bulletin 2012/50**

(51) Int Cl.:
***G06T 9/00*** (2006.01)

(21) Application number: **12171370.5**

(22) Date of filing: **08.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.06.2011 US 201113156920**

(71) Applicant: **Visual Technology Services Ltd.
Ascot
Berkshire SL5 7HP (GB)**

(72) Inventors:
• **Curington, Ian
Ascot, Berkshire SL5 7HP (GB)**
• **Petrov, Petr
346780 Azov (RU)**

(74) Representative: **Salmon, Victoria Beatrice
IP Asset LLP
Prama House
267 Banbury Road
Oxford
OX2 7HT (GB)**

(54)  **COLOR MESH COMPRESSION**

(57)    A method of compressing data defining a colored polygonal mesh surface is disclosed. Color data associating points on a polygonal mesh surface is processed to determine a set of representative colors for coloring the polygonal mesh surface. The mesh surface is then divided into a number of sub-meshes each associated with one of the representative set of colors, wherein each of the sub-meshes comprises the portions of the colored polygonal mesh surface associated with colors which are determined to be similar to the representative color associated with the sub-mesh. An alternative representation of the colored polygonal mesh surface is then generated comprising mesh data defining geometry and connectivity of polygonal mesh surfaces corresponding to each of the sub-meshes and color data indicative the representative colors associated with the sub-meshes.

Fig. 1

EP 2 533 202 A2

**Description**

FIELD

The present invention relates generally to data compression and particularly to compression of triangle or other polygonal mesh computer graphics associated with color data.

The invention is particularly applicable to the compression of mesh data where the numbers of triangles or polygons in a mesh is much greater than the numbers of visually distinct colors used to render the mesh.

BACKGROUND

Triangle or other polygonal meshes are widely used with contour color surface attributes to represent scientific, numerical or quantifiable characteristics. Such data sets are very common in LiDAR, Sonar, GIS, Geology, Geophysics, and other application areas. Generated data sets can, however, be extremely large and the communication lines through which such data may be transferred over the Internet or other networks typically have a limited average rate of data transfer. It is, therefore important to compress data objects as best possible before transfer. Similar issues arise with the storage of data representing complex colored surfaces. The better the compression method which is used, the more data can be transferred in a given amount of time or the greater amount of data which can be stored for a given resource.

3D mesh data is typically composed of geometry, connectivity and attribute data. Geometry data identify vertex positions in 3D space; connectivity data describe how these vertices are connected together; and attribute data specifies information, such as colors, associated with positions of a surface. In the case of scientific data often such surface color patterns are associated with meaning such as stress, temperature, material type, concentration, material properties, elevation, depth, age, speed, vorticity, viscocity, stratigraphy, contamination, and a plethora of similar attributes. The association of color representation to some continuous or discontinuous field attribute is most typically using some one-dimensional color map, lookup table, or legend bar.

In order to associate the surface of a 3D mesh with color data, typically each vertex is associated with set of red, green and blue (R, G, B) values. These triples are stored as byte data with values ranging from 0-255. Such data requires 24-bit, 3-byte storage. Alternatively color data may be stored as three single precision floating point values requiring 4-bytes per value, i.e. 12-byte storage per vertex. According to mesh connectivity, this results in near 12-byte per triangle storage for optimal connectivity such a triangle-strip structure, or worst case 36-bytes per triangle without shared connectivity. Color rendering for any position on a surface can then be determined by interpolating color values from the color values associated with the vertices.

A conventional approach to compressing triangle mesh data is disclosed in "Highly Compressed Tessellation (PRC-HCT)" in ISO24517-1:2008 PDF/E SC2N570-PRC-WD.pdf (21 July 2009 Edition) available for download from http://pdf.editme.com/PDFE which is hereby incorporated by reference.

This conventional approach distinguishes between stand-alone triangle processing and neighbor triangle processing as a smaller data set for encoding triangles is achieved when processing connected triangles rather than stand-alone-triangles. This is because if two triangles share a common edge, once data for one of the triangles has been stored, data for the connected triangle only requires storing data identifying the other vertex of the connected triangle. In order to take advantage of the reduction in the size of the data set which arises through encoding triangles as neighboring triangles rather than stand alone triangles it is necessary to traverse the connected triangles in some defined fashion. In the case of the PRC-HCT method this is achieved by selecting an initial triangle and then parsing the triangle's neighbors. Neighbors of neighbors are then parsed followed by neighbors of neighbors or neighbor's etc building up a binary edge traversal tree. In this way the processing order is fully determined by the first triangle on the list and is not dependent upon any other triangle order.

The volume of color data required to color a wire mesh surface can be reduced using texture mapping techniques. Typically, such techniques involve generating a texture map containing a scalar color map RGB table. Derived quantity u, v texture coordinates are associated with each vertex of the mesh to create the lookup into the appropriate color. Typically such u, v texture co-ordinates are pairs, of single precision floating point numbers, incurring an 8-byte storage cost. The replacement of 12 byte RGB triples with a pair of u, v look up co-ordinates therefore reduces the size of the color data.

Having reduced the size of a data set for a triangular mesh and the color data, the processed data is then compressed using conventional data compression algorithms such as the Deflate algorithm in zLib written by Jean-Loup Gailly and Mark Adler. The Deflate algorithm is a lossless data compression algorithm which acts in two stages. Initially, data is processed to identify duplicate data streams and copies are replaced with references symbols. These symbols are then replaced with codes where the most frequent symbols are replaced using the shortest codes thereby reducing the size of the data. Further details of the zLib algorithm can be found in for example the DEFLATE Compressed Data Format Specification, L. Peter Deutsch, Aladdin Enterprises, 21 March 1996, available for download from http://

tools.ietf.org/html/rfc1951 which is hereby incorporated by reference.

Although data compression using the PRC-HCT compression and u, v texture co-ordinates reduces the size of data required to encode a colored triangular mesh, better compression schemes are sought in order to allow more rapid transfer and improved storage of data representing colored 3D surfaces.

## SUMMARY

In accordance with one aspect of the present invention there is provided a method of compressing mesh data defining a geometry and connectivity of a colored polygonal mesh surface and color data associating points on the polygonal mesh surface defined by the mesh data with colors, the method comprising: processing the color data to determine a set of representative colors for coloring the polygonal mesh surface; dividing the polygonal mesh surface into a number of sub-meshes each associated with one color from the determined representative set of colors, wherein each of the sub-meshes comprises those portions of the colored polygonal mesh surface associated with colors which are determined to be similar to the representative color associated with the sub-mesh; and generating an alternative representation of the colored polygonal mesh surface comprising mesh data defining geometry and connectivity of polygonal mesh surfaces corresponding to each of the sub-meshes and color data indicative the representative colors associated with the sub-meshes.

In embodiments where the color data comprises color data associating the vertices of a polygonal mesh with defined colors, the method may additionally comprise identifying polygons in the colored polygonal mesh surface where the color data associated with vertices connected by edges of a polygon identify colors which are more than a threshold distance apart in color space; modifying the mesh data defining the geometry and connectivity of the colored polygonal mesh surface by dividing the identified polygons; and determining additional color data for the divided polygons utilizing the color data associated with the vertices of the identified polygons.

In the case of triangle meshes this may involve iteratively updating mesh data to include an additional vertex at the mid-point of an edge connecting vertices associated with color data which identify colors which are more than a threshold distance apart in color space and associating the additional vertex with the average color data of the vertices connected by the edge.

Alternatively, modifying a triangle mesh may involve identifying triangles where the color data associated with vertices connected by edges of a triangle identify colors which are associated with different representative colors; updating mesh data to include additional vertices at the intersections of triangle edges with color boundaries corresponding to transition points between portions of triangle edges associated with different representative colors; and associating such additional vertices with color data corresponding to the average of the representative colors associated with adjacent points on the triangle edge.

Processing color data to determine a set of representative colors for coloring the polygonal mesh surface may comprise identifying all the unique colors identified by the color data. Additionally or alternatively a set of representative colors may be determined by identifying a subset of the identified unique colors. Such a set of representative colors may comprise a set of colors spread in color space such that none of the identified unique colors is more than a predetermined distance in color space from at least one of the colors in the set. Alternatively the sub-set may comprise a predetermined number of colors. In some embodiments the predetermined number of colors may be in the range of 100 to 500 colors and more preferably is in the region of 200 colors.

Dividing a polygonal mesh surface into a number of sub-meshes may comprise: associating each polygon in a polygonal mesh surface with a color; determining for each of the representative colors in the set of representative colors, the set of polygons associated with colors which are closer in color space to the representative color than any other of the representative colors in the set of representative colors; and dividing the polygonal mesh surface into a number of sub-meshes corresponding to the identified sets of polygons.

Where the color data associates the vertices of each polygon in the polygonal mesh with a defined color, associating each polygon in the polygonal mesh surface with a color may comprise determining for each polygon the average of the colors associated with the vertices of the polygon. Alternatively, where the color data associates each surface polygon with a defined color this data may be used directly to determine a division of a polygonal mesh into a number of sub-meshes.

In accordance with another aspect of the present invention there is provided a data compression apparatus for compressing data defining colored polygonal mesh surfaces, the apparatus comprising: a mesh data store operable to store mesh data defining a geometry and connectivity of a colored polygonal mesh surface and color data associating points on the polygonal mesh surface defined by the mesh data with colors; a color analysis module operable to process stored color data to determine a set of representative colors for coloring a polygonal mesh surface; and a mesh division module operable to divide a polygonal mesh surface into a number of sub-meshes each associated with one color from a determined representative set of colors determined by the color analysis module, wherein each of the sub-meshes comprises those portions of the colored polygonal mesh surface associated with colors which are determined to be similar to the representative color associated with the sub-mesh and generate an alternative representation of the colored polygonal mesh surface comprising mesh data defining geometry and connectivity of polygonal mesh surfaces corresponding to each of the sub-meshes and color data indicative the representative colors associated with the sub-meshes.

In accordance with a further aspect there may be provided a computer readable medium storing computer interpretable instructions which when interpreted by a programmable computer cause the computer to perform a method as described above.

## BRIEF DESCRIPTION OF THE DRAWINGS

An embodiment of the present invention will now be described with reference to the accompanying drawings in which:

Figure 1 is a schematic block diagram of computer system incorporating an encoding module in accordance with an embodiment of the present invention;

Figure 2 is a schematic block diagram of the encoding module of Figure 1;

Figure 3 is a flow diagram of the processing of the encoding module of Figure 1 to generate encoded data representing a colored three dimensional mesh surface by dividing the mesh into a number of sub-meshes based on the colors associated with different portions of the mesh;

Figures 4A & 4B are schematic illustrations of the sub-division of a triangle;

Figure 5 is a plan view of an exemplary set of color contours for rendering a wire mesh model;

Figure 6 is a plan view of an exemplary wire mesh model after the model has been processed to divide triangles having large color gradients based on the set of color contours of Figure 5;

Figure 7 is a plan view of a portion of the wire mesh model of Figure 5 identifying two sub-meshes associated with two different colors;

Figure 8 is a flow diagram of the processing of the encoding module of Figure 1 to determine a set of colors to be used to divide a mesh into a number of sub-meshes;

Figure 9 is a flow diagram of the processing of an encoding module in accordance with a second embodiment of the present invention; and

Figures 10 A and 10B are schematic illustrations of the sub-division of a triangle based on the identification of the intersection of triangle edges with points corresponding to color boundaries.

## DETAILED DESCRIPTION

### First embodiment

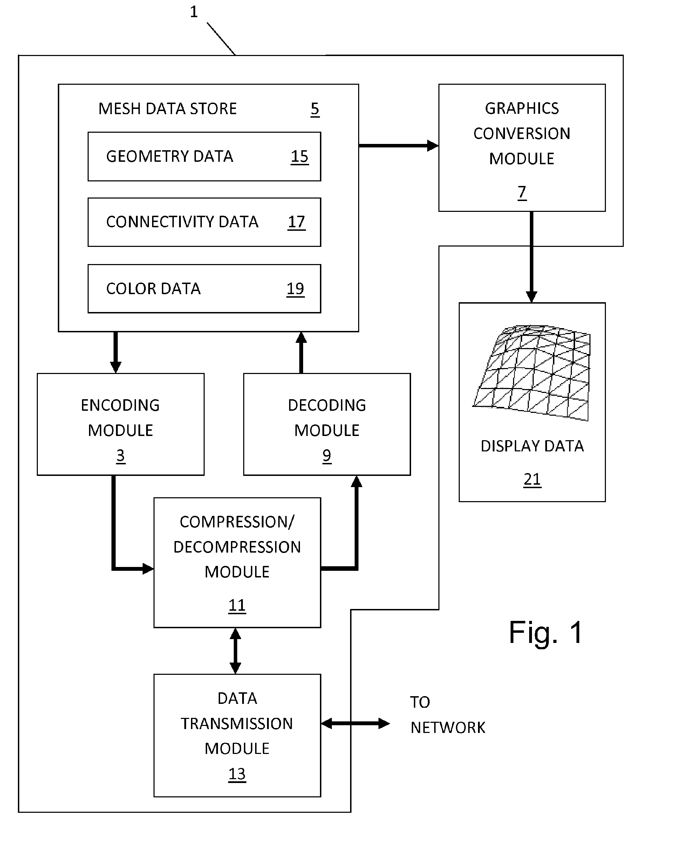

Figure 1 is a schematic block diagram of a computer system 1 incorporating an encoding module 3 in accordance with an embodiment of the present invention. In addition to the encoding module 3, the computer system 1 also comprises: a mesh data store 5, a graphics conversion module 7, a decoding module 9, a compression/decompression module 11 and a data transmission module 13.

The mesh data store 5 is arranged to store mesh data comprising: geometry data 15 identifying 3D co-ordinates of a set of points in space; connectivity data 17 indicating how the points defined by the geometry data connect to form a triangle mesh; and color data 19 identifying how the surface defined by the geometry data 15 and connectivity data 17 is to be colored. In this embodiment, the color data comprises RGB data associating each vertex identified by an item of geometry data 15 with a color.

The graphics conversion module 7 is arranged to process the mesh data 15, 17, 19 stored in the mesh data store 5 and generate a display data 21 being a visual representation of the stored mesh data 15, 17, 19 which can be displayed on a display screen.

Mesh data 15, 17, 19 and in particular color data 19 for a mesh can be of a significant size. For that reason if such data is to be transmitted to another computer via a communications network, the data needs to be compressed.

As will be described, in order to facilitate improved data compression, the encoding module 3 analyses a surface represented by mesh data 15, 17, 19 and identifies areas of a mesh which are associated with the colors which are not appreciably different. The encoding module 3 then proceeds to divide the surface represented by mesh data 15, 17, 19 into a number of sub-meshes on the basis of the color data 19. Each sub-mesh is then associated with a representative color and encoded individually. The processing greatly reduces the amount of color data 19 which is needed to be encoded and transmitted as rather than having to encode an item of color data 19 for each vertex in the mesh, only one item of color data 19 is required for each of the sub-meshes. This reduction in the volume of color data 19 more than compensates for a slight increase in the complexity of connectivity and geometry data 15, 17 which can arise when dividing a mesh into a number of sub-meshes identifying areas of visually similar color.

Having encoded the mesh data 15, 17, 19, the encoding module 3 then passes the encoded data to the compression/decompression module 11 which compresses the encoded data using the conventional zLib DEFLATE process. Once encoded and compressed the compressed data is then passed to the data transmission module 13 and transmitted to another computer via a network.

When data is received by the data transmission module 13 from the network it is passed to the compression/decompression module 11 which decompresses the received data. The decompressed data is then passed to the decoding module 9 which converts the deompressed data into mesh data 15, 17, 19 which can then be stored in the mesh data store 5 before being used by the graphics conversion module 7 to generate display data 21 for viewing.

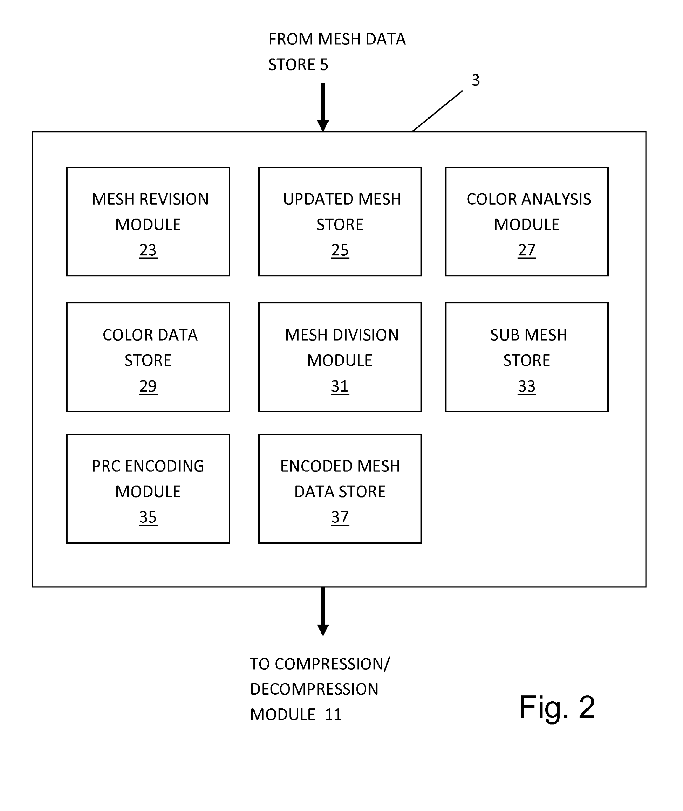

Figure 2 is a schematic block diagram of the encoding module 3 of Figure 1. In this embodiment the encoding module 3 comprises a mesh revision module 23; an updated mesh store 25; a color analysis module 27; a color data store 29; a mesh division module 31; a sub-mesh store 33; a PRC encoding module 35; and an encoded mesh data store 37.

The mesh revision module 23 is arranged to identify triangles in the original mesh data 15, 17, 19 the vertices of which are associated with color data 19 which indicates that there is a significant variation in color across the surface of a triangle. Where this is the case, such triangles are sub-divided into smaller triangles which are not associated with such a significant variation and revised mesh data representing the mesh where such triangles are sub-divided is stored in the updated mesh store 25.

The color analysis module 27 is arranged to process color data 19 stored in the updated mesh store 25 and determine a set of representative colors associated with a mesh and store data identifying the colors in the color data store 29.

The mesh division module 31 is arranged to utilize the determined set of representative colors identified by data in the color data store 29 and revised mesh data stored in the updated mesh store 25 to divide the mesh into a set of sub-meshes where each of the sub-meshes comprise a set of triangles associated with color data which is not visually distinct from each other. Data defining each of the sub-meshes is then stored in the sub-mesh store 33.

Finally, the PRC Encoding module 35 then processes each of the sub-meshes identified by data in the sub-mesh store 29 separately using conventional techniques to generate compressed data representing the geometry data 15 and connectivity data 17 of each of the sub-meshes which is stored in the encoded mesh data store 33. This data is then passed together with data identifying the individual representative colors associated with each of the sub-meshes is then passed to the compression/decompression module 11 for additional processing and compression before transmission by the data transmission module 13.

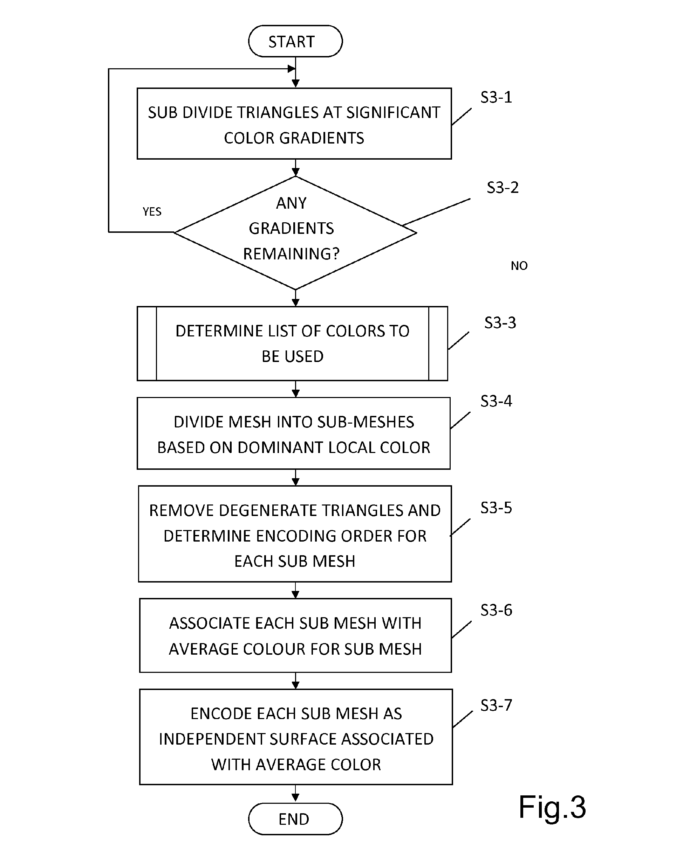

Referring to Figure 3 which is a flow diagram of the processing undertaken by the encoding module 3, when the encoding module 3 is first invoked, the encoding module 3 initially (s3-1) causes the mesh revision module 23 to process mesh data 15, 17, 19 to identify portions of the mesh which correspond to significant color gradients.

More specifically after copying geometry connectivity and color data 15, 17, 19 for the mesh being processing from the mesh data store 5 into the updated mesh store 25, the mesh revision module 23 then processes the mesh data 15, 17, 19 to identify triangles in the mesh where the distance in CIELab color space between the color data 19 associated with vertices of an edge of a triangle are more than a threshold distance apart.

To identify such triangles initially the RGB color data 19 for vertices in the mesh are converted into corresponding triples in CIELab color space where the RGB values are converted into a brightness value L where L ranges from 0 indicative of black and L=100 indicates diffuse white, a first color co-ordinate a, indicating a position between red/magenta and green where negative values indicate green and positive values indicate magenta and a second color co-ordinate b, indicating a position between yellow and blue where negative values indicate yellow and positive values indicate blue.

Due to the limitations of the human visual system even where two colors are represented by different RGB values, where these values are similar, frequently the human eye will not be able to distinguish the colors. However, the ability to distinguish different colors varies in different parts of the spectrum. As the CIELab color space approximates the visual system, the relative distances in CIELab color space are indicative of how visually distinct each color is perceived to be and hence enable visually in distinct colors to be identified.

Having identified edges where the vertices are associated with, the mesh revision module 23 then proceeds to generate a modified set of geometry and connectivity data 15, 17 where the triangles in the original mesh including edges associated with differences in color greater than a threshold value are divided into smaller triangles.

More specifically the mesh revision module 23 initially determines for each pair of vertices identified as being connected by an edge whether the color distance between the color data 19 associated with the vertices as defined by the following equation is greater than a threshold.

$$color\ distance = \sqrt[2]{(L_1 - L_2)^2 + (a_1 - a_2)^2 + (b_1 - b_2)^2}$$

where $L_1$, $a_1$ and $b_1$ and $L_2$, $a_2$ and $b_2$ are the CIELab color space values for a pair of vertices connected by an edge.

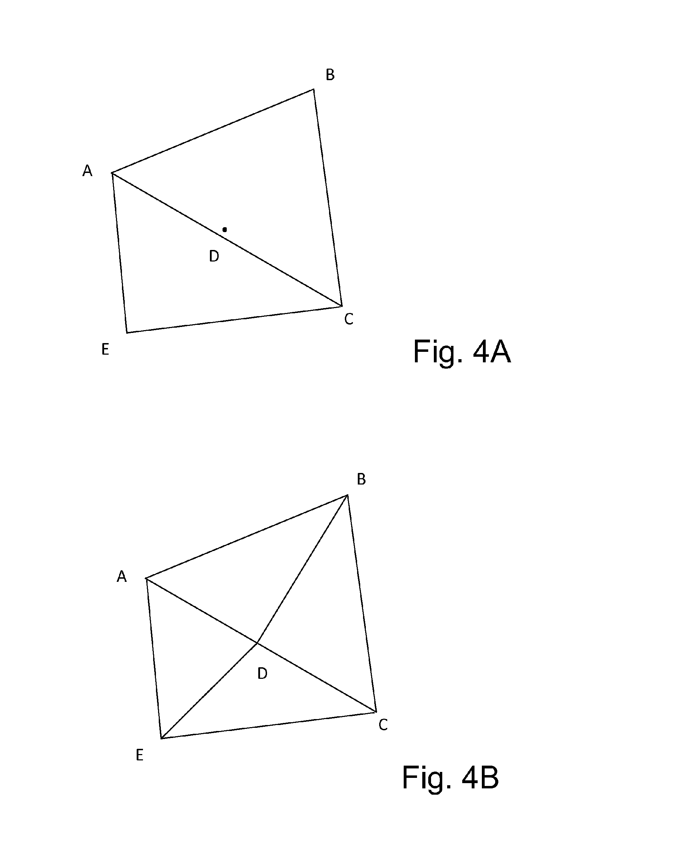

Having identified such vertices, triangles including such edges are sub-divided. More specifically as shown in Figures 4A and 4B having identified an edge AC of a triangle ABC in the mesh as where the vertices A C are associated with color values which are separated from one another in CIELab color space by more than a threshold value, initially the co-ordinates for the mid-point of the line AC is determined and stored as a new point D of geometry data 15. Connectivity data 17 for the triangle ABC and other triangles sharing edge AC such as triangle AEC is then replaced with connectivity data for 4 new triangles ABD, BCD, ADE and EDC. Color data 19 for the new vertex D is created by calculating an average of the color values associated with vertices A and C.

Having processed all of the triangles of the mesh and divided any triangles edges associated with a color gradient greater than a threshold value, the mesh revision module 23 then determines (s3-2) if the all of the edges of triangles in the modified mesh are associated with color values separated in color space by less than a threshold amount. If this is not the case the mesh revision module 23 further modifies (s3-1) the mesh data by subdividing any triangles where any such color gradients exist.

Thus in this way the mesh is processed and modified by sub-dividing triangles in the mesh surface so that the mesh is represented by edges connecting vertices where the distance in color space between two vertices on a connected edge is not greater than a threshold amount.

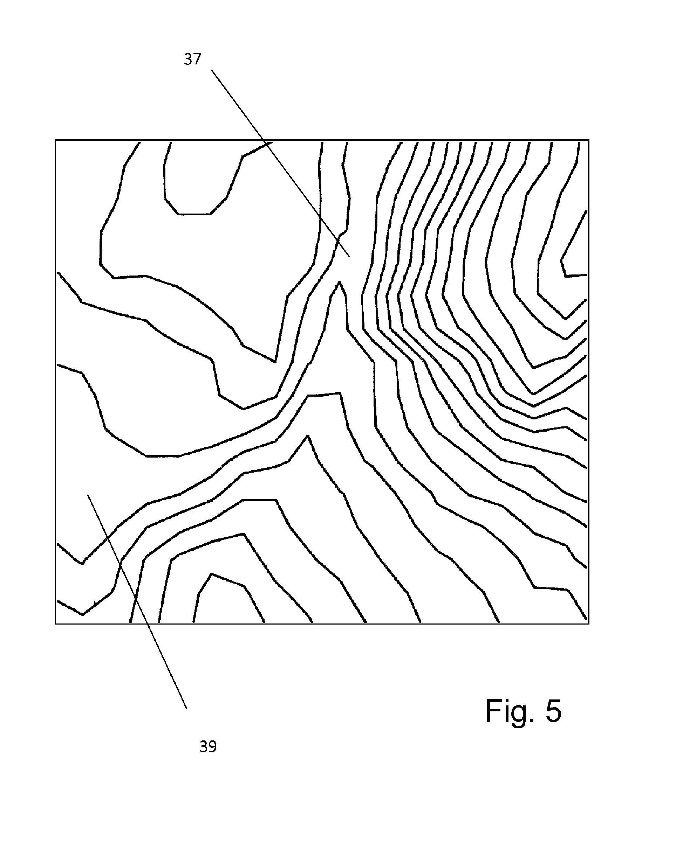

Figure 5 illustration of an exemplary set of color contours for rendering a wire mesh model. In Figure 5 lines are shown which correspond to iso-chromes where the lines connect identifying points on a surface to be associated with the same color values. Where the iso-chromes are close together this indicates a portion of a surface where a significant color gradient exists. In contrast where there are wider gaps between the iso-chromes a surface would be colored with similar colors. The areas marked as 37 and 39 are two adjacent areas of color which lie between iso-chromes and hence are examples of portions of a surface which should be associated with similar colors.

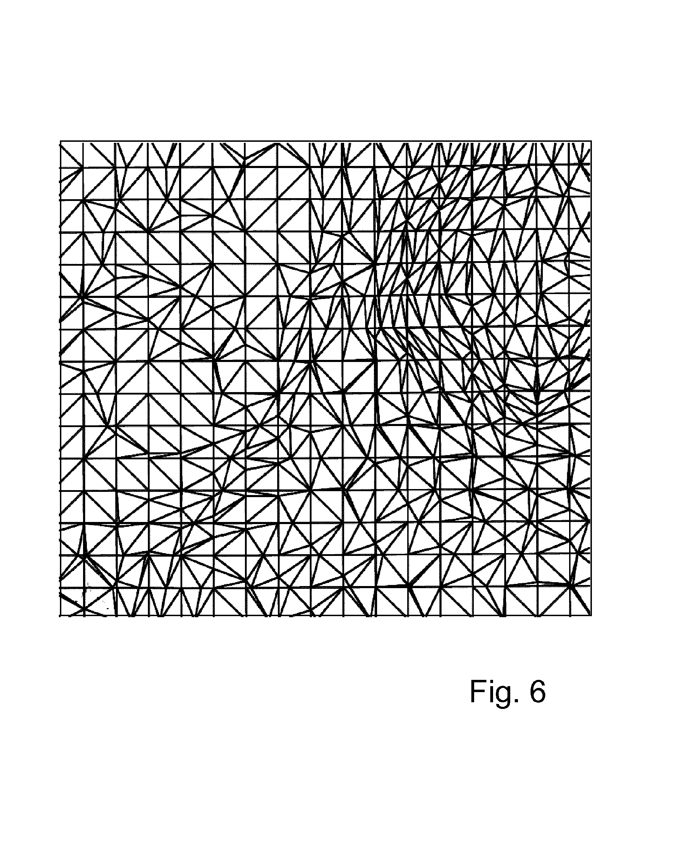

Figure 6 is a plan view of an exemplary wire mesh model after the model has been processed to divide triangles having large color gradients based on the set of color contours of Figure 5. As can be seen from comparing Figures 5 and 6 the effect of dividing triangles in the wire mesh model is such to cause the numbers of triangles in the mesh in areas of greater color variation to increase. Additionally subdividing triangles in areas of greater color variation until the color gradients along edges of triangles are less than a threshold also causes triangle edges to become broadly aligned with the iso-chromes of the color data 9.

The sub-division of triangles in this way enables the mesh to be sub-divided into a number of sub-meshes each comprising groups of triangles where all of the vertices of triangles are associated with color data 19 identifying visually similar colors.

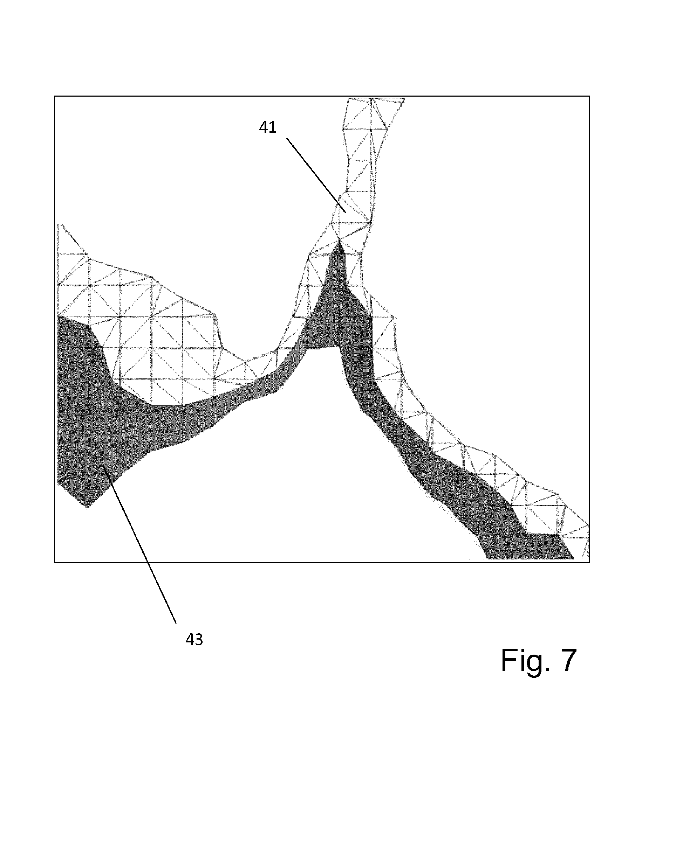

Thus for example assuming the iso-chromes of Figure 5 divide the surface of a mesh into portions each corresponding to visually distinct colors, then as shown in Figure 7 the areas 37 39 of similar color identified in Figure 5 will substantially correspond to sub-meshes 41, 43 in Figure 7 where these sub-meshes are sub-meshes of the mesh shown in Figure 6.

The processing of the encoding module 3 to identify a set of colors to be utilized to divide a mesh in to a set of sub-meshes associated with visually distinct colors will now be described. Returning to Figure 3 having processed (s3-1) the mesh data 15, 17, 19 to sub-divide triangles with large color gradients and determined (s3-2) that no triangles with significant color gradients remain, the encoding module 3 then invokes the color analysis module 27 to determine (s3-3) a set of colors for rendering a representation of the mesh.

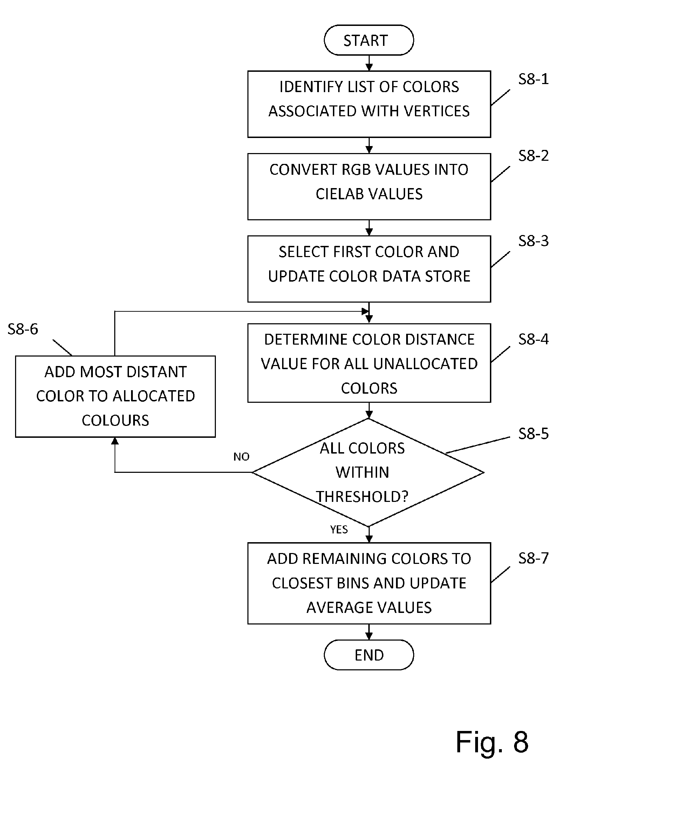

The processing undertaken by the color analysis module 27 to determine a set of colors to be utilized to render a mesh is illustrated in the flow diagram of Figure 8.

Initially, (s8-1) the color analysis module 27 copies the color data 19 for the mesh being processed from the updated mesh store 25 into the color data store 29. The color analysis module 27 then removes duplicate entries from the copied data. Processing the color data 19 in this way causes color data 19 to be stored in the color data store 29 which identifies each of the individual colors associated with the vertices in the updated mesh.

Having generated this list of colors as identified by a set of RGB triples, the color analysis module 27 then proceeds (s8-2) to convert each of the RGB triples into corresponding triples in CIE Lab color space. The color analysis module 27 then selects (s8-3) a first one of the colors and changes the status of that color from unallocated to allocated and then (s8-4) determines for each of the unallocated colors stored in the color data store 29 a distance value indicative of the minimum distance in CIELab color space between that color and any of other colors in the color data store 29 which are associated with an allocated status.

In this embodiment this distance value is determined by calculating the minimum Euclidian distance in CIELab color space between an unallocated color and all the allocated colors in the color data store 29 using the following equation:

$$Min \sqrt[2]{\frac{(L_c - L_i)^2 + (a_c - a_i)^2 + (b_c - b_i)^2}{n}}$$

Where $L_c$, $a_c$ and $b_c$ are the CIELab color space values for an unallocated color for which a distance value is being calculated; $L_i$, $a_i$ and $b_i$ are the CIELab color space values for an colors which have already been allocated; and $n$ is the number of colors allocated to date.

Having calculated distance values for each of the unallocated colors, these minimum distance values are compared (s8-5) with a threshold corresponding to a predetermined assessment of the distance in color space which is considered to be visually appreciable.

If any of the minimum distance values are greater than the threshold, this will indicate that at some of the unallocated colors are visually appreciably different from all of the allocated colors. If this is the case, the color analysis module 27 then (s8-6) proceeds to identify the unallocated color associated with the greatest minimum distance value. This color will be the color which is most visually distinct from the colors which have already be assigned an allocated status. The status of the unallocated color associated with the greatest minimum distance value is then updated to have an allocated status. The color analysis module 27 then (s8-4) recalculates the minimum distance values for the remaining unallocated colors taking into account the update, before determining once again (s8-5) whether all of the unallocated values are associated with minimum distance values which are less than the selected threshold.

Thus in this way the color analysis module 27 selects a sub-set of the colors identified by color data 19 in the color data store 29. All of the selected colors will be visually distinct from one another as they will all be separated from one another in color space by at least the threshold distance. Additionally, each of the unallocated colors will be no more than a threshold distance in color space from at least one of the allocated colors. Hence the remaining unallocated colors will be visually indistinct from at least one of the allocated colors in the sub-set identified by the color analysis module 27.

Having identified this initial subset, the color analysis module 27 then (s8-7) proceeds to determine a final set of colors to be used to represent portions of the mesh being encoded.

More specifically, initially each of the allocated colors is assigned to a separate color bin and the average color represented by data allocated to each bin is determined. Initially as a single color is assigned to each color bin these average values will correspond to the individual colors assigned to each bin.

The minimum distance values between each of the unallocated colors and colors average colors associated with each bin is then determined to identify the unallocated color which is closest in color space to one of the average colors. This unallocated color is then allocated to that bin and the average color for the bin is updated. This process is then repeated to identify the next closest unallocated color closest to one of the average values associated with a color bin until all of the colors represented by data stored in the color data store 29 have been assigned to a color bin.

Thus at this stage every color corresponding to color data 19 associated with a vertex in the updated mesh data will be assigned to a color bin associated with an average color value where that average color value is not visually distinct from the appearance of the original color data. Further by virtue of the processing of the mesh revision module 23, the data stored in the updated mesh store 25 will be such that the mesh is represented by a set of triangles where the colors associated with each vertex in a triangle differ by not more than a threshold amount.

Returning to Figure 3, having determined (s3-3) a set of colors to be used to represent the colored mesh, the encoding module 3 then causes the mesh division module 31 to divide the mesh as represented by mesh data 15, 17, 19 in the updated mesh store 25 into a number of sub-meshes.

Initially the mesh division module 31 considers each of the triangles of the mesh as defined by the mesh data 15, 17, 19 in the updated mesh store 25 in turn. For each triangle the average of the color data 19 associated with the vertices of the triangle is determined. The distance in CIELab color space between the average color value of the triangle being processed and the average color values associated with color bins in the color data store 29 are then determined and the color bin associated with the color closest to the average color value is identified. Data indicating the assignment of the triangle to that color bin is then stored in the sub-mesh store 33.

When all of the mesh data has been processed, this will mean that every triangle in the mesh defined by data in the updated mesh store 25 will be identified with one of the average colors associated with color bins in the color data store 29. As the mesh data will have already been processed to remove significant color gradients each of the surface represented by an individual triangle will be such to appear to be a single color which will have a visual appearance which is substantially identical to the color identified by color data in the color data store 29.

The mesh division module 31 then (s3-5) takes each of the average colors associated with the color bins in turn and proceeds to generate mesh geometry 15 and connectivity data 19 for the triangles stored in sub-mesh store 33 which are associated with that particular color.

More specifically, in this embodiment once a set of triangles associated with a particular color bin has been determined, the mesh division module 31 initially checks the geometry data for the triangles to identify any degenerate triangles which may have been generated as a result of sub-dividing triangles having significant color gradients. That is to say the mesh division module 31 utilizes the geometry data 15 for the triangles to identify any triangles where the geometry data identifies a set of three vertices which all lie on the same line. If any such triangles are identified, they are deleted from the data in the sub-mesh store 33.

Having removed any degenerate triangles, the mesh division module 31 then updates the connectivity data 17 for the sub-mesh so order create an ordering of the triangles.

More specifically in the original mesh data 15, 17, 19 in the mesh data store 5, triangles are likely to be associated with a particular ordering. However, since such an ordering is based upon the entirety of the mesh it is often not particularly suitable for encoding only part of a mesh.

Thus for example where triangles in a mesh are associated with a set of numbers often it is helpful to have adjacent triangles associated with consecutive numbers. Where only a subset of an entire mesh is considered this may no longer be the case and therefore it can be helpful to reassign the identification of the connectivity of triangles afresh solely considering those triangles only within the sub-mesh being considered.

Once the connectivity data 17 in the mesh being processed so that triangles are ordered based upon their connectivity within the sub-meshes, each of the sub-meshes is then (s3-6) associated with the average color for the sub-mesh. This can be achieved by associating each sub-mesh with the average color associated with the color bin utilized to select portions of the mesh to be included in a sub-mesh. Alternatively in other embodiments, the average color of the surface of the sub-mesh being processed could be determined from the color data 19 associated with vertices of triangles included in the sub-mesh.

When each of the sub-meshes has been processed in this way, the sub-mesh store 33 will have stored geometry data 15 and connectivity data 17 of a set of sub-meshes where each sub-mesh is associated with a single item of color data 19.

Thus for example in the case of the color data and mesh data shown in Figures 5 and 6, mesh data defining a sub-mesh for each of the portions of the mesh of Figure 6 associated with a distinct color would be stored. Thus for example in the case of the area the mesh corresponding to area 37 in Figure 5 mesh data for the mesh 41 of Figure 7 would be stored where this mesh was associated with an item of color data identifying a color to be utilized to render the mesh. Similarly, mesh data for the mesh 43 of Figure 7 would be stored associated with the color corresponding to the area 39 of Figure 5.

Having determined a color for each of the sub-meshes, the encoding module 3 then (s3-7) causes the PRC encoding module 35 to process the geometry 15 and connectivity data 17 of each of the sub-meshes in turn to generate encoded geometry 15 and connectivity data 17 which is stored in the encoded mesh data store 37.

In this embodiment, this processing comprises conventional PRC encoding which is to say that an initial seed triangle for the sub-mesh is selected and processed and a binary edge traversal tree for the triangles in the sub-mesh is then built up by identifying and processing the triangles neighbors and then the neighbors of neighbors etc. This is continues for all until all of the triangles in the sub-mesh which are connected to the initial triangle have been processed. The PRC encoding module 35 then checks whether an entire sub-mesh has been encoded. If this is not the case this will indicate that the sub-mesh includes a least some disconnected areas and the PRC encoding module 35 then select one of the triangles which have not yet been encoded as a new seed triangle before processing that triangles neighbors and neighbors of neighbors etc.

When processing triangles within the sub-mesh geometry data for an initial seed triangle $[\mathbf{V}_0, \mathbf{V}_1, \mathbf{V}_2]$, is encoded by determining and storing data for the vectors $\mathbf{V}_0$, $\mathbf{V}_1-\mathbf{V}_0$ and $\mathbf{V}_2-(\mathbf{V}_0+\mathbf{V}_1)/2$ which implicitly encode the geometry data for the triangle in the encoded mesh data store 35. Having determined such data a check is then made to determine if data corresponding to any of these vectors has already been stored when processing any other part of the triangle mesh. If this is the case, the explicit data for the newly stored vector is replaced with a pointer to the previously stored data.

When processing triangles $[\mathbf{V}_0, \mathbf{V}_1, \mathbf{V}_2]$ and $[\mathbf{V}_0, \mathbf{V}_1, \mathbf{V}_3]$, connected by a common edge $[\mathbf{V}_0, \mathbf{V}_1]$, once data encoding the vertices of the triangle $[\mathbf{V}_0, \mathbf{V}_1, \mathbf{V}_2]$ has been determined and stored, data for the second triangle is encoded solely by encoding data for the vertex $\mathbf{V}_3$ which in this embodiment is achieved by storing data for the vector as a point in a co-ordinate system relative to the centre of the common edge $[\mathbf{V}_0, \mathbf{V}_1]$ in terms of unit vectors running along axes $(\mathbf{V}_1-\mathbf{V}_0)$, $\mathbf{V}_3-(\mathbf{V}_1+\mathbf{V}_0)/2)^\wedge(\mathbf{V}_1-\mathbf{V}_0)$ and $(\mathbf{V}_3-(\mathbf{V}1+\mathbf{V}_0)/2)^\wedge(\mathbf{V}_1-\mathbf{V}_0))^A(\mathbf{V}_1-\mathbf{V}_0)$. Again once data encoding the new vertex has been determined and stored a check is made to see if corresponding data has previously been stored in the encoded mesh data store 37 and if so the explicit data is replaced with a pointer to the earlier stored data.

Thus in this way geometry and connectivity data 15, 17 for each of the sub-meshes is encoded in turn. This data together with the color data 19 indicating a color to be utilized to color each of the sub-meshes is then passed to the compression/decompression module 11 where the encoded data is compressed and then passed for to the data transmission module 13 for transmission.

As the data set which is passed to the compression/decompression module 11 includes a single item of color data 19 for each sub-mesh rather than for each of the vertices in the mesh the size of this data before and after compression is smaller than a corresponding mesh where color data is associated with every vertex in the mesh.

Thus for example in a test case of a surface representing elevation data defined by 245, 980 triangles defining a well-connected dense triangle mesh to which a color scale representing elevation was applied, the following results were achieved.

| | Compressed file size | Compression rates |
| --- | --- | --- |
| Reference mesh only, no color, no texture data | 399, 684 bytes | 13 bits per triangle |
| Reference mesh with color data stored as UV texture co-ordinates per vertex | 1, 971, 630 bytes | 64 bits per triangle |
| Reference mesh with color data stored relative to 74 sub-meshes with color specified per sub-mesh | 583, 698 bytes | 19 bits per triangle |

As will be apparent from reviewing the data above, the encoding of color data for a mesh accounts for a significant portion of the data for encoding a surface. Thus in the above example using conventional techniques, data encoding color information accounts for almost 80% of the size of a compressed data file for a mesh as compared with only 20% being accounted for by data representing color information. Thus in the above using conventional techniques color data in the compressed data accounts for around 51 bits per triangle in the mesh compared with around 13 bits utilized to encode geometry and connectivity data.

By dividing the mesh into a number of sub-meshes each associated with a single color and then encoding the mesh and color data in the manner described data sizes are greatly reduced. In the example above the data foot print of a compressed example file is reduced 3.3 times compared with the conventional compression techniques. The approach therefore facilitates the utilization of colored surfaces as the additional overhead after compression for adding such color information is reduced compared with a mesh without color information from an additional overhead of almost 400% to an additional overhead of around 45%.

After transmission a representation of the original surface and color data can be regenerated by decompressing the compressed data and then regenerating the original mesh from the compressed data. Such a regeneration will be visually indistinguishable from the original mesh data as all of the original geometry of the original mesh is retained and the modification of the color values of individual points on the surface of the mesh is controlled so as to be visually indistinguishable from the original color information.

## Second embodiment

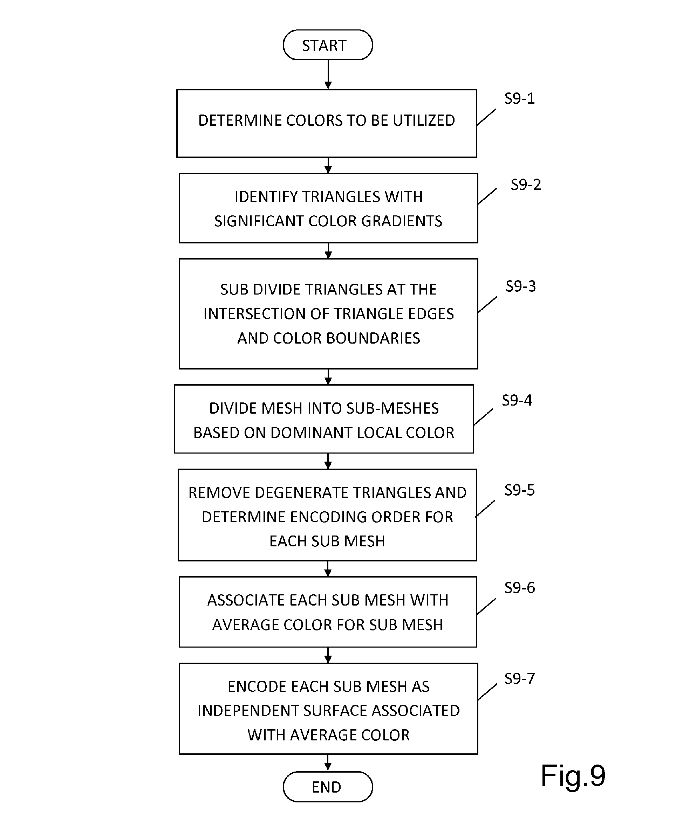

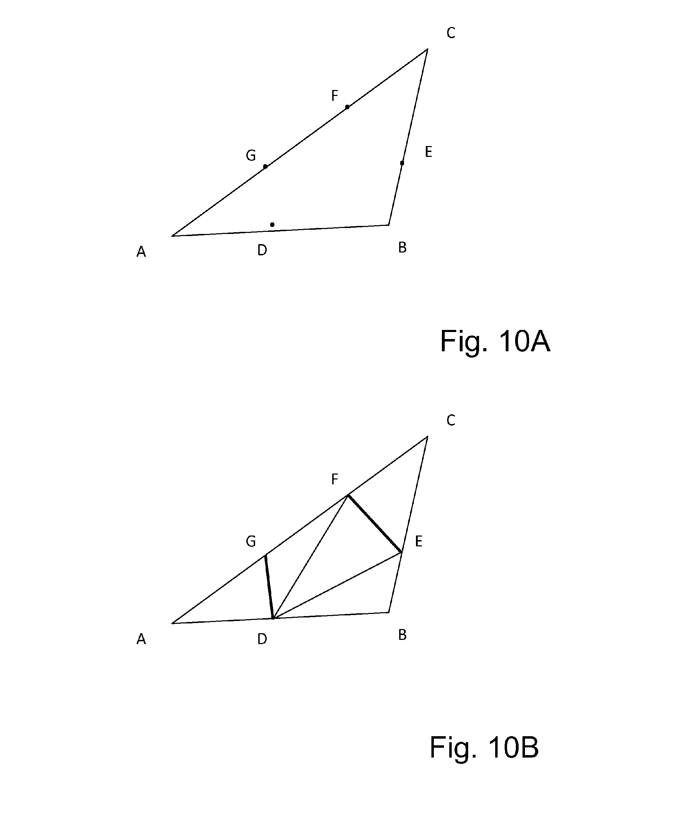

A second embodiment of the present invention will now be described with reference to Figures 9 and 10 A and B.

In the previous embodiment, a system has been described where the sub-division of triangles associated with large color gradients is undertaken prior to the determination of a representative set of colors for dividing a mesh into a number of sub-meshes. Undertaking processing in this order enables the representative colors to be determined based upon both the original color data 19 associated with a mesh and additional color data added for the new vertices which are added to the mesh when triangles are sub-divided. An alternative embodiment will now be described where the ordering of the triangle division steps and the determination of a set of colors is reversed with the result that the determination of a set of representative colors is made just on the basis of the original color data.

Referring to Figure 9 which is a flow diagram of the processing of an encoding module in accordance with a second embodiment of the present invention, initially (s9-1) when encoding color data, the encoding module 3 determines a set of representative colors to be utilized to represent the surface being encoded. This can be achieved in a similar way to the identification of a set of colors (s3-3) described in the previous embodiment. However in this embodiment, rather than utilizing color data for vertices in a modified mesh where triangles have been sub-divided, the set of representative colors is determined directly from the original color data 19 without the color data 19 being updated to associate additional new vertices in the triangle mesh with color data 19.

Having determined a representative set of colors to be utilized, the encoding module 3 then (s9-2) identifies the triangles in the mesh which are associated with significant color gradients. In this embodiment, this is achieved by processing each of the triangles in the mesh in turn. The representative color in color space which is closest to the color data 19 associated with each of the vertices is then determined. If the same closest representative color is identified for all of the colors associated with vertices of a triangle, this indicates that no significant variation in color occurs across that triangle and no further processing is undertaken.

For each triangle where a significant color gradient is identified, the encoder 3 then (s9-4) proceeds to sub-divide the triangle at positions corresponding to the intersection of triangle edges with color boundaries. To achieve this, the colors associated with points lying at the edges of triangles with significant color gradients are considered. For each point, the closest representative color in color space to an interpolated color value for the point on the edge of the triangle based on the color data associated with the vertices connected by the edge being processed is determined and the positions at the triangle edge where the closest representative color is determined to change are identified.

Referring to Figure 10 A, by way of example the vertices of the triangle A, B, C in Figure 10A could be assumed to be associated with three adjacent colors in color space: color 1, color 2 and color 3 respectively. When processing such a triangle, four transition points might be identified, a transition from color 1 to color 2 at point D on the line A-B, a transition from color 2 to color 3 at point E on the line B-C, and two transition points F and G on the line A,C at the color boundaries between color 3 and color 2 and color 2 and color 1 respectively.

Having identified these transition points on all three edges of a triangle being processed, the geometry data 15 for the mesh is updated to include geometry data 15 identifying the location of these transition points. The new points are then associated with color data 19 determined for the point of transition being the average of the representative colors associated with points either side of the transition point.

Thus in the case of the triangle of Figure 10A, having identified the positions of the transition points D, E, F & G, geometry data 15 for these points would be added and each of the transition points would be associated with color data 19. In this example this would involve associating points D & G with the average of colors 1 & 2 and points E & F with the average of colors 2 & 3.

Having updated the geometry data 15 and color data 19, the encoder 3 then proceeds to update connectivity data for the mesh to incorporate the new vertices into the mesh and to indicate connections between the new vertices associated with the same colors. In the example of Figure 10 A this would involve adding data to indicate connections between points D & G and points E & F. Finally, additional connections are added to divide any remaining non- triangular polygons into a set of triangle. In the example being considered a single non triangular polygon would be identified which in this example would be the polygon B, E, F, G, D and then sub-divided into a set triangles. The result of such processing is shown in Figure 10B.

It will be appreciated that by updating the triangle mesh in this way triangles are formed with edges associated with constant color which correspond to color boundaries between adjacent colors. Thus in the case of Figure 10B the lines connecting D & G and E & F correspond to iso-chromes of constant color being the average of colors 1 & 2 and colors 2 & 3 respectively. Subsequently when associating triangle with representative colors, triangles either side of such iso-chromes will be associated with different representative colors. Thus in the case of the example of Figure 10B, triangle ADG would be associated with color 1 as the average color associated with the points A, D, G will be closest in color space to color 1, triangle ECF would be associated with color 3 as the average color associated with the points E, C, F would be closest in color space to color 3 and the remaining triangles would be associated with color 2 as the average color for the vertices for each of the remaining triangles will be closest in color space to color 2.

Returning to Figure 9, having updated the mesh data 15, 17, 19, the encoder 3 then processes the updated mesh in a similar way to that described in the previous embodiment by dividing (s9-4) the mesh into a number of sub-meshes, deleting any degenerate triangles and determining an encoding order (s9-5); and associating each sub-mesh with a single representative color (s9-6). Finally having divided the surface into a set of sub-meshes each associated with a single representative color, the encoder then encodes (s9-7) each sub-mesh separately and outputs encoded representations of each of the sub-meshes together with color data identifying the representative color for representing that the sub-meshes.

**Further alternatives and embodiments**

Although in the above embodiments a system has been described which processes mesh data representing a surface in the form of a set of triangles, it will be appreciated that the described invention is equally applicable to processing any type of polygonal mesh data.

It will also be appreciated that although in the above embodiments color data 19 associated with mesh vertices is processed, the system could be modified to process color mesh data where color data is associated with polygon surfaces rather polygon vertices. In such embodiments it would not be necessary to sub-divide any triangles as where color data for a polygon in a mesh is represented by a single item of color data 19, no color gradients would occur across the surface of a polygon. Rather where color data 19 is associated with surfaces rather than vertices the original color data 19 could be used in an unmodified form to divide a mesh into sub-meshes associated with similar colors

In the above embodiments, a system has been described where a set of colors is determined and utilized to divide a mesh into a number of sub-meshes, with the set of colors being calculated so that representations of a mesh are not appreciably different from representations generated using original color data. Such an approach is preferable as it ensures that any the modification of color data which arises from the compression of data is not visually apparent.

Another alternative approach to the one described would be to set a parameter for the number of colors to be utilized to assign polygons to different sub-meshes. Such a parameter could be set independent of the numbers of color required to represent a surface in a manner which did not appreciably alter the appearance of a mesh. Thus for example surfaces could be processed to be divided into a fixed number of sub-meshes say 200. In such an embodiment the set of 200 colors to be utilized could be determined using conventional color quantization techniques and then once the set of 200 colors had been determined mesh data could be processed to divide the mesh into sub-meshes using the set. For most data sets where a surface is to be rendered with colors corresponding to field data little appreciable difference in appearance arises where the numbers of colors utilized is limited to between 100 and 500. For most applications, therefore, limiting the numbers of colors to the region of 200 provides a good compromise between retaining visual accuracy and limiting the numbers of sub-meshes and hence the volume of color data to be used to represent a surface.

In some cases, rather than determining a sub-set of colors to be utilized to determine a division of a surface into a number of sub-meshes, such processing could be omitted and a mesh divided into a number of sub-meshes using all of the original colors associated with a mesh. Such an approach would be suitable to encode mesh data where the number of colors associated with a mesh is significantly less than the total numbers of polygons representing a mesh.

In the above embodiments color data 19 is described as being converted from RGB color space into CIELab color space prior to being processed to identify a set of representative colors. Such an approach is preferable as distances in CIELab color space are more representative of the differences of color apparent to the eye. However, in some embodiments calculations of distance could be made in RGB color space and the conversion to CIElab color space could be omitted.

When determining colors to be associated with sub-meshes a number of approaches could be utilized. In the above embodiment the average of colors closest to an initial seed color is described as being utilized. In some embodiments rather than determining an average color, the representative color chosen to be used for a set of colors could be weighted on the basis of the frequencies of the constituent colors associated with a color bin within the original color data 19 for a surface.

Although in the above embodiments data has been described as being compressed prior to transmission via a communications network, it will be appreciated that the described system is applicable to compressing data for colored 3D mesh surfaces generally and as such could be utilized whenever data compression is desired.

In the above embodiments, each sub-mesh is described as being processed by the PRC encoding module 35 independently. It will be appreciated that although such an approach simplifies the processing of mesh data such an approach necessarily results in the duplication of geometry data 15 for points at the edge of sub-meshes. Generally due to the efficiencies of encoding geometry and connectivity data 15, 17 this additional overhead is not significant. If it were to be desired to reduce this overhead, the encoding undertaken by the encoding module 35 could be modified to replace explicit encoding of geometry for the shared edges of sub-meshes with pointers identifying the corresponding geometry data of a previously encoded mesh.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

**Claims**

1. A method of compressing mesh data defining a geometry and connectivity of a colored polygonal mesh surface and color data associating points on the polygonal mesh surface defined by the mesh data with colors, the method comprising:

processing the color data to determine a set of representative colors for coloring the polygonal mesh surface; dividing the polygonal mesh surface into a number of sub-meshes each associated with one color from the determined representative set of colors, wherein each of the sub-meshes comprises those portions of the colored polygonal mesh surface associated with colors which are determined to be similar to the representative color associated with the sub-mesh; and

generating an alternative representation of the colored polygonal mesh surface comprising mesh data defining geometry and connectivity of polygonal mesh surfaces corresponding to each of the sub-meshes and color data indicative the representative colors associated with the sub-meshes.

2. The method of claim 1, wherein the color data associating points on the polygonal mesh surface defined by the mesh data with colors comprises color data associating the vertices of each polygon in the polygonal mesh with defined colors, the method further comprising:

identifying polygons in the colored polygonal mesh surface where the color data associated with vertices connected by edges of a polygon identify colors which are more than a threshold distance apart in color space;

modifying the mesh data defining the geometry and connectivity of the colored polygonal mesh surface by dividing the identified polygons; and

determining additional color data for the divided polygons utilizing the color data associated with the vertices of the identified polygons.

3. The method of claim 2, wherein the polygon mesh surface comprises a triangle mesh surface; and modifying the mesh data and determining additional color data comprises updating mesh data to include an additional vertex at the mid-point of an edge connecting vertices associated with color data which identify colors which are more than a threshold distance apart in color space and associating the additional vertex with the average color data of the vertices connected by the edge.

4. The method of claim 1, wherein the polygon mesh surface comprises a triangle mesh surface and the color data associating points on the triangle mesh surface defined by the mesh data with colors comprises color data associating the vertices of each triangle in the triangle mesh with defined colors, the method further comprising:

identifying triangles in the colored polygonal mesh surface where the color data associated with vertices connected by edges of a triangle identify colors which are associated with different representative colors;

updating mesh data to include additional vertices at the intersections of triangle edges with color boundaries corresponding to transition points between portions of triangle edges associated with different representative colors; and

associating such additional vertices with color data corresponding to the average of the representative colors associated with adjacent points.

5. The method of any of claims 1 to 4, wherein processing the color data to determine a set of representative colors for coloring the polygonal mesh surface comprises (1) identifying all the unique colors identified by the color data and/or (2) determining a subset of the identified unique colors.

6. The method of claim 5, wherein the determined subset of identified unique colors comprises either (1) a set of colors spread in color space such that none of the identified unique colors is more than a predetermined distance in color space from at least one of the colors in the set, or (2) a predetermined number of colors selected from the set of identified unique colors, optionally within a .range of 100 to 500 colors and more preferably in the region of 200 colors.

7. The method of any one of claims 1 to 6, wherein dividing the polygonal mesh surface into a number of sub-meshes each associated with one color from the determined representative set of colors comprises:

associating each polygon in the polygonal mesh surface with a color;

determining for each of the representative colors in the set of representative colors the set of polygons associated with colors which are closer in color space to that representative color than any other of the representative colors in the set of representative colors; and

dividing the polygonal mesh surface into a number of sub-meshes corresponding to the identified sets of polygons.

8. The method of claim 7, wherein either (1) the color data associating points on the polygonal mesh surface defined by the mesh data with colors comprises color data associating the vertices of each polygon in the polygonal mesh with defined colors and associating each polygon in the polygonal mesh surface with a color comprises determining for each polygon the average of the colors associated with the vertices of the polygon or (2) the color data associating points on the polygonal mesh surface defined by the mesh data with colors comprises color data associating each polygon in the polygonal mesh with a defined color and associating each polygon in the polygonal mesh surface with a color comprises utilizing the colors identified by color data as the colors associated with the polygons.

9.  A data compression apparatus for compressing data defining colored polygonal mesh surfaces, the apparatus comprising:

a mesh data store operable to store mesh data defining a geometry and connectivity of a colored polygonal mesh surface and color data associating points on the polygonal mesh surface defined by the mesh data with colors;
a color analysis module operable to process stored color data to determine a set of representative colors for coloring a polygonal mesh surface; and
a mesh division module operable to divide a polygonal mesh surface into a number of sub-meshes each associated with one color from a determined representative set of colors determined by the color analysis module, wherein each of the sub-meshes comprises those portions of the colored polygonal mesh surface associated with colors which are determined to be similar to the representative color associated with the sub-mesh and generate an alternative representation of the colored polygonal mesh surface comprising mesh data defining geometry and connectivity of polygonal mesh surfaces corresponding to each of the sub-meshes and color data indicative the representative colors associated with the sub-meshes.

10. The apparatus of claim 9, wherein the mesh data store is operable to store color data associating the vertices of each polygon in a polygonal mesh with defined colors, the apparatus further comprising:

a mesh revision module operable to:

identify polygons in a colored polygonal mesh surface defined by stored data where color data associated with vertices connected by edges of a polygon identify colors which are more than a threshold distance apart in color space;
modify the mesh data defining the geometry and connectivity of the colored polygonal mesh surface by dividing identified polygons; and
determine additional color data for the divided polygons utilizing the color data associated with the vertices of the identified polygons.

11. The apparatus of claim 10, wherein mesh data store is operable to store data defining a geometry and connectivity of a triangle mesh surface; and wherein the mesh revision module is operable to modify mesh data and determine additional color data by updating mesh data to include either (1) an additional vertex at the mid-point of an edge connecting vertices associated with color data which identify colors which are more than a threshold distance apart in color space and associating the additional vertex with the average color data of the vertices connected by the edge, or (2) additional vertices at the intersections of triangle edges with color boundaries corresponding to transition points between portions of triangle edges associated with different representative colors; and associate such additional vertices with color data corresponding to the average of the representative colors associated with adjacent points on the triangle edge.

12. The apparatus of any of claims 9 to 11, wherein the color analysis module is operable either (1) to process color data to determine a set of representative colors for coloring a polygonal mesh surface by identifying all the unique colors identified by stored color data and/or (2) to determine a set of representative colors for coloring a polygonal mesh surface comprising a set of colors spread in color space such that none of the identified unique colors identified by stored color data is more than a predetermined distance in color space from at least one of the colors in the set, such set of representative colors for coloring a polygonal mesh surface optionally comprising a predetermined number of colors.

13. The apparatus of any of claims 9 to 12, wherein the mesh division module is operable to:

associate each polygon in the polygonal mesh surface with a color;
determine for each of the representative colors in a determined set of representative colors, the set of polygons associated with colors which are closer in color space to that representative color than any other of the representative colors in the set of representative colors; and

divide a polygonal mesh surface into a number of sub-meshes corresponding to the identified sets of polygons.

14. The apparatus of claim 13, wherein (1) the mesh data store is operable to store color data associating the vertices of each polygon in the polygonal mesh with a defined color and the mesh division module is operable to associate each polygon in the polygonal mesh surface with a color by determining for each polygon the average of the colors associated with the vertices of the polygon, or (2) the mesh data store is operable to store color data associating each polygon in the polygonal mesh with a defined color and the mesh division module is operable to associate each polygon in the polygonal mesh surface with a color by utilizing the colors identified by color data as the colors associated with the polygons.

15. A non-transient computer readable medium storing computer implementable instructions which when interpreted by a programmable computer cause the computer to compress mesh data defining a geometry and connectivity of a colored polygonal mesh surface and color data associating points on the polygonal mesh surface defined by the mesh data with colors by:

processing the color data to determine a set of representative colors for coloring the polygonal mesh surface;
dividing the polygonal mesh surface into a number of sub-meshes each associated with one color from the determined representative set of colors, wherein each of the sub-meshes comprises those portions of the colored polygonal mesh surface associated with colors which are determined to be similar to the representative color associated with the sub-mesh; and
generating an alternative representation of the colored polygonal mesh surface comprising mesh data defining geometry and connectivity of polygonal mesh surfaces corresponding to each of the sub-meshes and color data indicative the representative colors associated with the sub-meshes.

Fig. 1

FROM MESH DATA
STORE 5

3

| MESH REVISION MODULE 23 | UPDATED MESH STORE 25 | COLOR ANALYSIS MODULE 27 |
|---|---|---|
| COLOR DATA STORE 29 | MESH DIVISION MODULE 31 | SUB MESH STORE 33 |
| PRC ENCODING MODULE 35 | ENCODED MESH DATA STORE 37 | |

TO COMPRESSION/
DECOMPRESSION
MODULE  11

Fig. 2

START

SUB DIVIDE TRIANGLES AT SIGNIFICANT COLOR GRADIENTS — S3-1

ANY GRADIENTS REMAINING? — S3-2

YES

NO

DETERMINE LIST OF COLORS TO BE USED — S3-3

DIVIDE MESH INTO SUB-MESHES BASED ON DOMINANT LOCAL COLOR — S3-4

REMOVE DEGENERATE TRIANGLES AND DETERMINE ENCODING ORDER FOR EACH SUB MESH — S3-5

ASSOCIATE EACH SUB MESH WITH AVERAGE COLOUR FOR SUB MESH — S3-6

ENCODE EACH SUB MESH AS INDEPENDENT SURFACE ASSOCIATED WITH AVERAGE COLOR — S3-7

END

Fig.3

Fig. 4A

Fig. 4B

Fig. 5

Fig. 6

Fig. 7

START

IDENTIFY LIST OF COLORS
ASSOCIATED WITH VERTICES — S8-1

CONVERT RGB VALUES INTO
CIELAB VALUES — S8-2

SELECT FIRST COLOR AND
UPDATE COLOR DATA STORE — S8-3

S8-6

ADD MOST DISTANT
COLOR TO ALLOCATED
COLOURS

DETERMINE COLOR DISTANCE
VALUE FOR ALL UNALLOCATED
COLORS — S8-4

ALL COLORS
WITHIN
THRESHOLD? — S8-5

NO

YES

ADD REMAINING COLORS TO
CLOSEST BINS AND UPDATE
AVERAGE VALUES — S8-7

END

Fig. 8

START

DETERMINE COLORS TO BE UTILIZED — S9-1

IDENTIFY TRIANGLES WITH
SIGNIFICANT COLOR GRADIENTS — S9-2

SUB DIVIDE TRIANGLES AT THE
INTERSECTION OF TRIANGLE EDGES
AND COLOR BOUNDARIES — S9-3

DIVIDE MESH INTO SUB-MESHES
BASED ON DOMINANT LOCAL COLOR — S9-4

REMOVE DEGENERATE TRIANGLES AND
DETERMINE ENCODING ORDER FOR
EACH SUB MESH — S9-5

ASSOCIATE EACH SUB MESH WITH
AVERAGE COLOR FOR SUB MESH — S9-6

ENCODE EACH SUB MESH AS
INDEPENDENT SURFACE ASSOCIATED
WITH AVERAGE COLOR — S9-7

END

Fig.9

Fig. 10A

Fig. 10B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Highly Compressed Tessellation (PRC-HCT. 21 July 2009

- **L. PETER DEUTSCH.** DEFLATE Compressed Data Format Specification. Aladdin Enterprises, 21 March 1996